# NEW EUROPEAN PATENT SPECIFICATION

(11) **EP 1 584 241 B2**
(45) Date of publication and mention of the opposition decision: **02.12.2015**
(45) Mention of the grant of the patent: 03.06.2009
(21) Application number: 04008549.0
(22) Date of filing: 08.04.2004
(51) Int. Cl.: A23G 9/32, A23G 9/04, A23L 1/035

(54) **Aerated frozen confections**
Aufgeschlagene, gefrorene Süssware
Friandise glacée aerée

(43) Date of publication of application: 12.10.2005
(73) Proprietor: Nestec S.A., 1800 Vevey (CH)
(72) Inventor: Schlegel, Myriam, 60000 Fouquenies (FR); Vieira, Josélio Batista, 95290 L'Isle-Adam (FR)
(74) Representative: Rupp, Christian

(56) References cited:
- WO-A-01/06865
- WO-A1-2005/060763
- GB-A- 1 446 144
- US-A1- 2003 134 025
- DATABASE FSTA [Online] INTERNATIONAL FOOD INFORMATION SERVICE (IFIS), FRANkFURT-MAIN, DE; 1997, KEBARY K M K ET AL: "Quality of ice cream as influenced by substituting non-fat dry milk with whey-bean proteins coprecipitates." XP002291513 Database accession no. 1998-08-p1344
- DATABASE FSTA [Online] INTERNATIONAL FOOD INFORMATION SERVICE (IFIS), FRANkFURT-MAIN, DE; 1979, HANSEN A P: "Using whey in ice cream." XP002291514 Database accession no. 80-4-02-p0418
- OPDAHL L J ET AL: "COMPOSITION AND CONSUMER ACCEPTANCE OF FROZEN YOGURTS UTILIZING WHEY PROTEIN CONCENTRATES1" JOURNAL OF DAIRY SCIENCE, AMERICAN DAIRY SCIENCE ASSOCIATION. CHAMPAIGN, ILLINOIS, US, vol. 74, no. 12, 1 December 1991 (1991-12-01), pages 4151-4163, XP000247051 ISSN: 0022-0302
- US 2003 134025 A1 (EQUIVALENT TO WO 01/06865)
- K.M.K. KEBARY ET AL.: 'Quality of ice cream as influenced by substituting non-fat dry milk with whey-bean proteins co-precipitates' EGYPTIAN JOURNAL OF DAIRY SCIENCE vol. 25, 1997, pages 311 - 325
- A.P. HANSEN ET AL.: 'Using whey in ice cream' DAIRY & ICE CREAM July 1979, pages 53 - 54
- International Ice Cream Association's Citizen Petition to amend various sectionsof Part 135 of FDA regulations, the standards of identity for Frozen Desserts
- Code of Federal Regulations, Title 21, Part 135
- FDA website policy, Docket Management, Freedom of Information and Docket entry for 1 May 2003; and
- GB 0329517.7 (priority application to D5 filed 19 December 2003)

## Description

### Field of the invention

The present invention relates to the field of aerated frozen confections and in particular to milk-based frozen confections and to the preparation of such a confection.

### Background of the invention

Milk-based frozen confections are traditionally made using ingredients such as: fat, milk solids-not-fat, sweeteners, stabilizers, emulsifiers and water. The various ingredients are mixed together, the mixture is then homogenized, pasteurized, cooled, optionally aged at about 2 to 6°C and deep-frozen with stirring and injection of air in a freezer to provide a degree of overrun of the order of 30 to 150%.

Frozen confections are particularly appreciated for their creamy and smooth characteristics. However, these products, in order to preserve their optimum organoleptic characteristics of smoothness, have to be stored and handled with care. Thus, temperature variations, even small, can be observed during storage, distribution or handling. This is particularly the case when the consumer buys a frozen confectionery, when they do not consume it straight away and when there is a gap between the time the product is taken from the deep-frozen section and when it is placed in the domestic freezer. In such circumstances, substantial or partial thawing of the product may occur before it is refrozen. Such cycles of temperature variation, called heat-shocks are responsible for the growth of ice crystals in the product. A crystallized texture thus results therefrom. This coarse texture and the icy mouth feel accompanied by an impaired appearance of the product compromise or at the very least reduce its overall quality as perceived by the consumer.

Various gums and/or emulsifiers have been used as additives with the aim of improving the stability, the smoothness and the resistance of frozen confections to heat shocks. These may include guar gum, carob or guar seed flour, alginate, carboxymethyl cellulose, xanthan, carrageenan, synthetic or natural emulsifiers. The milk proteins contained in the milk dry extract participate in this stabilization due to their water-binding property.

However, the use of gums has the disadvantage of conferring on the product a texture which is sometimes too firm or gummy.

WO 01/06865 is concerned with a process for the production of aerated frozen confections which are smooth and have resistance to heat shocks, which makes use of a specific ternary blend of emulsifiers and milk solids-not-fat coming predominantly from skim milk.

The problem which the invention proposes to solve consists in providing a formulation for aerated milk-based frozen confections with increased stability during heat shocks without compromising their organoleptic qualities which is achieved by using propylenglycol monoester of fatty acid.

### Summary of the invention

To this end, the present invention consists in an aerated frozen confection, with or without fat and comprising, sweeteners, milk solids-not-fat, water, emulsifier and stabilizer, **characterized in that** it comprises by weight:
0 to 12% fat, 4 to 10% milk solids-not-fat, 50 to 100% of the milk solids-not-fat are of whey origin, 10 to 25% sweeteners, 0 to 0.5% stabilisers, at least 0.2% propylenglycol monoester of fatty acid as primary emulsifier, and it has an overrun of 30 to 150% by volume,
under the proviso that the aerated frozen confection is not an ice cream having 20.8% cream having 38% fat, 4.25% skimmed milk powder, 5.50% demineralised whey powder, 11% sucrose, 7% glucose syrup having 80% total solids, 0.3% propylene glycol monostearate, 0.05% distilled monoglyceride, 0.03% sorbitan tristearate, 0.2% guar gum, 0.02% carrageenan, 0.12% vanilla flavouring, 0.10% colouring, 50.63% water and having an overrun of 120%.

A process for making aerated frozen confections comprising the following steps is disclosed :
- dispersion, heating and homogenisation of the ingredients entering into the composition of a frozen confection according to the present invention at a temperature, a pressure and for a period sufficient to hydrate and and pasteurize the mixture,
- cooling of the mixture to a temperature of between 2 and 8°C,
- optionally aging of the mixture at a temperature of between 2 and 6°C, with or without stirring, during 4 to 24 h,
- freezing to a temperature of between -4°C and -7°C, with incorporation of gas providing a degree of overrun of between 30 and 150%,
- hardening of the mixture by deep-freezing to a temperature of between -20°C and -40°C.

A method of improving storage stability of aerated frozen confections is disclosed, by reducing ice crystal growth after heat shock, which comprises adding propylenglycol monoester of fatty acid as primary emulsifier in an amount of at least 0.2 % by weight.

The percentages indicated in the description relate to the percentages by weight except in the case of the overrun values which are defined in % by volume.

### Detailed description of the invention

Preferably, a frozen confection according to the present invention may comprise 2 to 12 % fat, 10 to 25% of sweeteners, 8 to 10 % of milk solids-not-fat of which 80 to 100 % are of whey origin, 0.1 to 0.5 % of stabilizers, at least 0.2 % of propylenglycol monoester of fatty acid as primary emulsifier and water as balance.

Thus, according to the invention, the partial or total replacement of the milk solids-not-fat from milk and skim milk powder traditionally used by milk proteins from sweet whey at a level of 50% by weight or more allows substantial savings while maintaining or improving the resistance to heat shocks. Furthermore, the product thus obtained has a creamy and smooth mouth feel close to or even superior to that of the traditional product containing skim milk solids and mono-di glycerides as emulsifier. Thus, apart from the mere economic advantage, the invention makes it possible to simultaneously improve the textural and organoleptic qualities of frozen confections, in particular after heat shock abuses.

The milk solids-not-fat used for making a frozen confection according to the invention may be powdered or concentrated defatted sweet whey, for example. They may include powdered or concentrated skim milk, for example. Milk solids-not-fat may also be derived from a commercial mixture of milk powder and whey proteins whose functionality has been modified by specific denaturation treatments.

Preferably, propylenglycol monoester of fatty acid is used as a primary emulsifier in an amount of 0.2 to 0.5 % and most preferably in an amount of at least 0.26 %. Preferably propylenglycol monostearate/palmitate is used.

The frozen confections according to the invention may optionally comprise one additional emulsifier, for example, unsaturated monoglyceride or saturated mono-di glyceride in an amount of at least 5 % of the total emulsifiers, preferably in an amount of 0.04 to 0.16 % by weight as partial replacement of propylenglycol monoester of fatty acid.

The frozen confections according to the present invention may comprise stabilizing agents; these may include carob flour, guar flour, alginates, carboxymethyl cellulose, xanthan, carrageenan, gelatin, starches used alone or in the form of a mixture at a dose of 0.1 to 0.5 %, preferably about 0.25 %.

The fat used may be a vegetable or animal fat, hydrogenated or otherwise fractionated, for example. It may be a fat of plant origin, preferably palm, coconut, soybean, rapeseed, olive, palm kernel oil, hydrogenated coconut oil, hydrogenated soybean oil, palm olein and their mixtures. It may also be a fat of animal origin, preferably butter fat and/or its fractions.

Particularly preferred is a fat selected from the group consisting of palm oil, coconut oil, hydrogenated coconut oil, palm kernel oil and their mixtures.

The sweetener used may be sucrose, glucose, fructose or glucose syrup with DE (dextrose equivalent) varying from 20 to 42, or a mixture thereof, for example. The formulation of the product according to the invention may in addition comprise colourings such as beta-carotene, for example, and/or any type of flavourings or perfumes customarily used to flavour frozen confections, such as vanilla, strawberry or chocolate for example.

The compositions according to the invention may optionally comprise additions such as fruit or fruit pieces, for example, or nuts, or hazelnuts, whole or in pieces, for example.

The choice of such ingredients makes it possible to obtain products with increased stability as well with a substantial reduction in the cost price. These savings are made through the partial replacement of the milk solids-not-fat traditionally used by whey. Furthermore, the organoleptic qualities of the frozen compositions according to the invention are not reduced compared with the traditional products. Thus, the characteristics of smoothness and creaminess are increased and in particular, better preserved during the period of storage. In the frozen confections according to the invention, it is the use of propylenglycol monoester of fatty acid, as emulsifier which makes it possible to reduce remarkably the growth of water crystals in the products subjected to heat shock and thus it confers greater stability to heat shocks on the product.

For carrying out the process, the ingredients entering into the composition of a frozen confection according to the present invention may be dispersed at around approximately 60 to 70°C for approximately 15 to 30 min., for example. The whole may be heated and homogenized at around 70 to 75°C, for example, at a pressure of the order of 140 to 220 bar, for example. These steps of dispersion, heating and homogenisation make it possible to bring about hydration of the stabilizer.

The mixture may then be pasteurized according to methods known to persons skilled in the art, for example at around 80 to 90°C for 10 to 30 s. The homogenisation-heating step may be carried out at a pasteurization temperature which brings about, on its own, pasteurization of the mixture. The mixture may then be cooled to around 2 to 8°C by known means. This mixture may then be aged or otherwise for 4 to 24 h at around 2 to 6°C, for example, with or without stirring. After this aging step, the mixture may be frozen at around -3 to -7°C, and preferably at about -4.5 to -6° C with stirring with injection of gas so as to produce a degree of overrun of the order of 30 to 150 %, for example. The mixture obtained may then be hardened by freezing at around -20 to -40°C, for example.

After the aging step, the frozen compositions may, for example, be extruded in the form of bars having a greater or lesser degree of overrun, with the aid of an ice-cream industry refrigerated scraped surface heat exchanger or freezer with injection of gas. The aerated semi-frozen composition coming out of the freezer may also be filled into containers or moulds under pressure using a bottom-up filler, for example.

To evaluate the influence of the partial replacement of milk solids-not-fat from skimmed milk by whey solids and the remarkable properties of the emulsifier applied, various textural, microscopic and macroscopic tests may be carried out.

Standard heat shock: the samples initially stored at -30°C are subjected, for 7 days, to temperature cycles of -8°C/12h followed by -20°C/12h. After 7 days of stabilisation at -30° C, the melting parameters are evaluated for these samples which were subjected to a heat shock.

### Size and distribution of the ice crystals in an ice confection

An aliquot of ice confection is mixed with an equivalent quantity of glycerol and observed under a microscope at a temperature of -10°C. The measurement may be carried out in a chamber at -10°C equipped with microscope and a camera. It is thus possible to measure the mean diameter of the crystals (in µm) in the finished products and in the products which have been subjected to a heat shock (microscope magnification of 129).

The frozen confections according to the present invention exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

A frozen confection according to the present invention is therefore **characterized in that** it preserves its smooth texture and exhibits remarkable reduced growth of ice crystals due to ice recrystallization when submitted to heat shock conditions.

The expression "reduced crystal growth" is understood to mean an increase in the mean diameter of the ice crystals of less than 50% after heat shock (see Tables 2 and 4).

The invention is described below with reference to examples of preferred embodiments and modes of formulation. However, various adaptations and/or modifications may be made while remaining within the scope of the present invention.

### Examples

### Examples 1 and 2 , comparative examples 1 to 3

Examples of of frozen confections according to the present invention and comparative examples are produced according to the formulations indicated in Table 1 below.

The various ingredients are dispersed at 65°C and then undergo a hydration step at 60°C for 20 minutes. The mixture is then homogenized at 180 bar with the aid of homogenizer and then pasteurized at 86°C for 20 s. After cooling to 5°C, the mixture is aged for 24 hours at 4°C, without stirring. Finally, the mixture is frozen at about -5.1 to -5.7 °C draw temperature with a degree of overrun of 97 to 102 %. The ice confection obtained is hardened at -30°C by conventional means.

**Table 1**

| Ingredient | Ex. 1 | Comp Ex.1 | Ex. 2 | Comp Ex. 2 | Comp Ex. 3 |
|---|---|---|---|---|---|
| Sweet whey powder (SWP) | 10 | 0 | 8 | 0 | 2.5 |
| Skim milk powder (MSK) | 0 | 10 | 2 | 10 | 7.5 |
| PGMS | 0.3 | 0 | 0.3 | 0 | 0.3 |
| UMG | 0.08 | 0 | 0.08 | 0 | 0.05 |
| SMDG | 0 | 0.3 | 0 | 0.3 | 0 |
| Sorbitan tristearate | 0 | 0 | 0 | 0 | 0.03 |
| Guar Gum | 0.25 | 0.25 | 0.067 | 0.067 | 0.15 |
| Kappa carrageenan | 0 | 0 | 0.013 | 0.013 | 0.02 |
| Sodium alginate | 0 | 0 | 0.067 | 0.067 | 0 |
| Carboxymethyl cellulose | 0 | 0 | 0 | 0 | 0.05 |
| Vegetable lauric fat blend | 9 | 9 | 9 | 9 | 10 |
| Sucrose | 14 | 14 | 14 | 14 | 12.5 |
| Glucose syrup DE 38-42 | 3 | 3 | 3.2 | 3.1 | 4.5 |
| Water | 63.37 | 63.45 | 63.35 | 63.37 | 62.4 |

| | | | | | |
|---|---|---|---|---|---|
| Sweet whey powder: whey proteins, non demineralised from Euroserum, 10 to 12 % protein; Fat: Blend of refined coconut and refined deodorized palm oil; PGMS: Propyleneglycol monostearate PGMS SPV® from Danisco; UMG: Unsaturated monoglyceride DIMODAN UP/B® from Danisco; SMDG: Saturated Mono-diglycerides: ADMUL® 60-04 from Quest. | | | | | |

### Size of the crystals and ice crystal growth:

**Table 2**

| | Mean diameter of the ice crystals (µm) | | Growth after heat shock | |
|---|---|---|---|---|
| | Storage at -30°C | After heat shock | µm | % |
| Example 1 | 20 | 25 | 5 | 25 |
| Comp. Example 1 | 31 | 50.5 | 20.5 | 66 |
| Example 2 | 19 | 22.5 | 3.5 | 18 |
| Comp. Example 2 | 32 | 51 | 19 | 59.5 |
| Comp. Example 3 | 21 | 26.5 | 5.5 | 26 |

Table 2 shows the mean diameter of the ice crystals in various frozen products. It may be observed that the products containing propylenglycol monoester of fatty acid and UMG and predominantly sweet whey as milk solids-not-fat, on the one hand, a mean crystal diameter smaller than the references after heat shock. The samples according to the invention exhibit increases in crystal size which are significantly less than for the standard products (comparative examples 1 and 2) and even for the product of Example 3 of WO 01/06865 (comparative example 3). Analysis of the size and of the distribution of the ice crystals makes it possible to show that the partial or total replacement of the milk solids-not-fat from skim milk by milk solids-not-fat from whey improves the stability of the samples subjected to heat shock when propylenglycol monoester of fatty acid is used.

### Sensory analysis:

The samples are evaluated by a panel of people trained in the evaluation of texture. To that end, samples of examples 1 and 2 of the invention are compared with standard ice creams of comparative examples 1 and 2.

The questionnaire distributed contains the descriptive attributes for texture in the mouth:
- smoothness, absence of particles, ice crystals in the ice cream mass;
- chewyness, resistance to bite and
- mouth coating, amount and persistence of the fatty film coating the mouth and palate.

The smoothness of the products of Ex. 1 and Ex. 2 was significantly higher than the comparative examples. Some differences on other attributes were also observed, in particular Ex. 1 and Ex.2 showed increased chewyness and mouth coating.

### Examples 3-6

Frozen confections are manufactured as in examples 1-2 with different fat levels. As fat a mixture of palm oil and coconut oil is used. The formulations are indicated in Table 3 below. The size and crystal growth after heat shock are indicated in Table 4 below.

**Table 3**

| Ingredient | Ex. 3 | Ex. 4 | Ex. 5 | Ex. 6 |
|---|---|---|---|---|
| Fat | 3.6 | 5.4 | 7.2 | 10.2 |
| Sweet whey powder | 10 | 10 | 10 | 10 |
| PGMS | 0.3 | 0.3 | 0.3 | 0.3 |
| UMG | 0.08 | 0.08 | 0.08 | 0.08 |
| Guar | 0.25 | 0.25 | 0.25 | 0.25 |
| Sucrose | 14 | 14 | 14 | 14 |
| Glucose syrup DE 38-42 | 3 | 3 | 3 | 3 |
| Total solids adjusted to 36 with glucose syrup DE 20-22 | 36 | 36 | 36 | 36 |

### Size of the crystals and ice crystal growth:

**Table 4**

| | Mean diameter of the ice crystals (µm) | | Growth after heat shock | |
|---|---|---|---|---|
| Example | Storage at -30°C | After heat shock | µm | % |
| 3 | 18.5 | 19 | 0.5 | 2.7 |
| 4 | 19 | 19.5 | 0.5 | 2.6 |
| 5 | 21 | 26.5 | 5.5 | 26 |
| 6 | 21 | 23.5 | 2.5 | 11.9 |

Table 4 shows that the reduction of ice crystal growth after heat shock is substantially independent on the level of fat in the product.

### Example 7

The purpose of this example is to show that the emulsifier PGMS is capable of reducing ice crystal growth after heat shock even when used as sole emulsifier. Thus in this example, the emulsifier PGMS is used alone or together with UMG or SMDG in connection with milk solids-not-fat ingredient. The compositions are given in table 5 below.

**Table 5**

| Ingredients | Admul 60.04 | PGMS | PGMS/ Admul 60.04 | PGMS/Dimodan UP | Admul 60.04/ Dimodan UP |
|---|---|---|---|---|---|
| Fat | 9.00 | 9.00 | 9.00 | 9.00 | 9.00 |
| Milk solids-not-fat (SWP 80/MSK 20) | 10.00 | 10.00 | 10.00 | 10.00 | 10.00 |
| PGMS | 0 | 0.38 | 0.38 | 0.30 | 0 |
| SMDG | 0.38 | 0 | 0.08 | 0 | 0.30 |
| UMG | 0 | 0 | 0 | 0.08 | 0.08 |
| Stabilizer blend | 0.22 | 0.22 | 0.22 | 0.22 | 0.22 |
| Sugar | 14.00 | 14.00 | 14.00 | 14.00 | 14.00 |
| Glucose syrup DE 40 | 3.00 | 3.00 | 3.00 | 3.00 | 3.00 |
| Water to | 100% | 100% | 100% | 100% | 100% |

The results of ice crystal size after heat shock are given in Table 6 below.

**Table 6**

| | Mean diameter of the ice crystals (µm) After heat shock |
|---|---|
| Admul 60.04 | 48.5 |
| PGMS | 20.0 |
| PGMS + Admul 60.04 | 20.5 |
| PGMS + Dimodan UP | 19.5 |
| Admul 60.04 + Dimodan UP | 48.0 |

While with the recipes containing conventional mono-diglycerides, the crystal size after heat shock treatment is around 50 µm, all the samples containing PGMS, the ice crystal size was much smaller and around 20 µm.

The heat shock samples were also evaluated by a panel of people which score each attributes in a scale from 0 to 100. The results are given in Table 7 below.

**Table 7**

| | Attribute Smoothness |
|---|---|
| Admul 60.04 | 24.2 |
| PGMS | 70.8 |
| PGMS + Admul 60.04 | 70.0 |
| PGMS + Dimodan UP | 69.2 |
| Admul 60.04 + Dimodan UP | 35.0 |

The results show that the samples containing PGMS were significantly smoother than those containing only mono-diglycerides.

## Claims

1. Aerated frozen confection, with or without fat and comprising sweeteners, milk solids-not-fat, water, emulsifier and stabiliser, **characterised in that** it comprises by weight:
0 to 12% fat,
4 to 10% milk solids-not-fat,
50 to 100% of the milk solids-not-fat are of whey origin,
10 to 25% sweeteners,
0 to 0.5% stabilisers,
at least 0.2% propyleneglycol monoester of fatty acid as primary emulsifier, and it has an overrun of 30 to 150% by volume,
under the proviso that the aerated frozen confection is not an ice cream having 20.8% cream having 38% fat, 4.25% skimmed milk powder, 5.50% demineralised whey powder, 11% sucrose, 7% glucose syrup having 80% total solids, 0.3% propylene glycol monostearate, 0.05% distilled monoglyceride, 0.03% sorbitan tristearate, 0.2% guar gum, 0.02% carrageenan, 0.12% vanilla flavouring, 0.10% colouring, 50.63% water and having an overrun of 120%.

2. Aerated frozen confection according to claim 1, **characterised in that** it comprises 2 to 12% fat by weight.

3. Aerated frozen confection according to claim 1, **characterised in that** milk solids-not-fat are powdered or concentrated defatted sweet whey.

4. Aerated frozen confection according to claim 1, **characterised in that** the milk solids-not-fat comprise powdered or concentrated skim milk.

5. Aerated frozen confection according to claim 1, **characterised in that** the fat is vegetable or animal fat, hydrogenated or otherwise fractionated.

6. Aerated frozen confection according to claim 5, **characterised in that** the fat is selected from the group comprising palm oil, coconut oil, soybean oil, rapeseed oil, olive oil, palm kernel oil, hydrogenated coconut oil, hydrogenated soybean oil, palm olein, fractionated butter fat and their mixtures.

7. Aerated frozen confection according to claim 1, **characterised in that** it comprises at least one stabiliser chosen from the group comprising carob flour, guar flour, alginates, carboxymethyl cellulose, xanthan, carrageenan, gelatin, starches used alone or in the form of a mixture at a dose of 0.1 to 0.5%, preferably about 0.25% by weight.

8. Aerated frozen confection according to claim 1, **characterised in that** the sweeteners are chosen from the group comprising sucrose, glucose, fructose or glucose syrups or a mixture of these agents.

9. Aerated frozen confection according to claim 1, **characterised in that** it comprises as additional emulsifier, unsaturated monoglyceride or saturated mono-di glyceride in an amount of at least 5% by weight of the total emulsifiers in partial replacement of propyleneglycol monoester of fatty acid.

10. Aerated frozen confection according to claim 9, **characterised in that** it comprises as additional emulsifier, unsaturated monoglyceride or saturated mono-di glyceride in an amount of 0.04 to 0.16% by weight in partial replacement of propyleneglycol monoester of fatty acid.

## Patentansprüche

1. Luftdurchsetztes gefrorenes Konfekt mit oder ohne Fett und mit Süßstoffen, fettfreier Milchtrockenmasse, Wasser, Emulgator und Stabilisator, **dadurch gekennzeichnet, dass** es Folgendes in Gewichtsprozent enthält:
0 bis 12% Fett,
4 bis 10% fettfreie Milchtrockenmasse,
wobei 50 bis 100% der fettfreien Milchtrockenmasse aus Molke stammt,
10 bis 25% Süßstoffe,
0 bis 0,5% Stabilisatoren,
mindestens 0,2% Propylenglykol-Monoester von Fettsäure als Hauptemulgator, und einen Überlauf von 30 bis 150 Volumen-% aufweist, unter dem Vorbehalt, dass das luftdurchsetzte gefrorene Konfekt keine Eiscreme mit 20,8% Sahne mit 38% Fett, 4,25% Magermilchpulver, 5,50% entmineralisiertem Molkepulver, 11% Sukrose, 7% Glukosesirup mit 80% Gesamtfeststoffen, 0,3% Propylenglykol-Monostearat, 0,05% destilliertem Monoglyzerid, 0,03% Sorbitan-Tristearat, 0,2% Guarkernmehl, 0,02% Carrageen, 0,12% Vanillearoma, 0,10% Farbstoff, 50,63% Wasser und mit einem Überlauf von 120% ist.

2. Luftdurchsetztes gefrorenes Konfekt gemäß Anspruch 1, **dadurch gekennzeichnet, dass** es 2 bis 12 Gew-% Fett enthält.

3. Luftdurchsetztes gefrorenes Konfekt gemäß Anspruch 1, **dadurch gekennzeichnet, dass** fettfreie Milchtrockenmasse pulverförmige oder konzentrierte fettarme Süßmolke ist.

4. Luftdurchsetztes gefrorenes Konfekt gemäß Anspruch 1, **dadurch gekennzeichnet, dass** die fettfreie Milchtrockenmasse pulverförmige oder konzentrierte Magermilch enthält.

5. Luftdurchsetztes gefrorenes Konfekt gemäß Anspruch 1, **dadurch gekennzeichnet, dass** das Fett aus pflanzlichem oder tierischem Fett besteht, das hydriert oder anderweitig fraktioniert ist.

6. Luftdurchsetztes gefrorenes Konfekt gemäß Anspruch 5, **dadurch gekennzeichnet, dass** das Fett aus der Gruppe ausgewählt ist, die Palmöl, Kokosöl, Sojaöl, Rapsöl, Olivenöl Palmkernöl, hydriertes Kokosöl, hydriertes Sojaöl, Palmolein, fraktioniertes Butterfett sowie deren Mischungen enthält.

7. Luftdurchsetztes gefrorenes Konfekt gemäß Anspruch 1, **dadurch gekennzeichnet, dass** es mindestens einen Stabilisator ausgewählt aus der Gruppe enthält, die Johannisbrotkernmehl, Guarkernmehl, Alginate, Carboxymethylcellulose, Xanthan, Carrageen, Gelatine, und Stärken umfasst, die allein oder in Form einer Mischung in einer Menge von 0,1 bis 0,5%, vorzugsweise ca. 0,25 Gew-% eingesetzt werden.

8. Luftdurchsetztes gefrorenes Konfekt gemäß Anspruch 1, **dadurch gekennzeichnet, dass** Süßstoffe aus der Gruppe ausgewählt sind, die Sukrose, Glukose, Fruktose oder Glukosesirups oder eine Mischung aus diesen Stoffen enthält.

9. Luftdurchsetztes gefrorenes Konfekt gemäß Anspruch 1, **dadurch gekennzeichnet, dass** es als zusätzlichen Emulgator ungesättigtes Monoglyzerid oder gesättigtes Mono-Diglyzerid in einer Menge von mindestens 5 Gew-% der gesamten Emulgatoren bei teilweisem Austausch von Propylenglykol-Monoester von Fettsäure enthält.

10. Luftdurchsetztes gefrorenes Konfekt gemäß Anspruch 9, **dadurch gekennzeichnet, dass** es als zusätzlichen Emulgator ungesättigtes Monoglyzerid oder gesättigtes Mono-Diglyzerid in einer Menge von 0,04 bis 0,16 Gew-% bei teilweisem Austausch von Propylenglykol-Monoester von Fettsäure enthält.

## Revendications

1. Produit de confiserie congelé aéré, avec ou sans matière grasse et comprenant des agents édulcorants, de l'extrait sec dégraissé du lait, de l'eau, un émulsionnant et un stabilisant,
**caractérisé en ce qu'**il comprend, en poids :
0 à 12 % de matière grasse,
4 à 10 % d'extrait sec dégraissé du lait,
50 à 100 % de l'extrait sec dégraissé du lait provenant du petit-lait,
10 à 25 % d'agents édulcorants,
0 à 0,5 % de stabilisants,
au moins 0,2 % de monoester de propylèneglycol d'acide gras comme émulsionnant primaire, et il présente un foisonnement de 30 à 150 % en volume,
avec la restriction que le produit de confiserie congelé aéré n'est pas une crème glacée présentant 20,8 % de crème présentant 38 % de matière grasse, 4,25 % de poudre de lait écrémé, 5,50 % de poudre de petit-lait déminéralisé, 11 % de saccharose, 7 % de sirop de glucose présentant 80 % d'extraits secs totaux, 0,3 % de monostéarate de propylèneglycol, 0,05 % de monoglycéride distillé, 0,03 % de tristéarate de sorbitane, 0,2 % de gomme de guar, 0,02 % de carraghénine, 0,12 % d'agent aromatisant de vanille, 0,10 % de colorant, 50,63 % d'eau et présentant un foisonnement de 120 %.

2. Produit de confiserie aéré congelé suivant la revendication 1, **caractérisé en ce qu'**il comprend 2 a 12 % de matière grasse, en poids.

3. Produit de confiserie aéré congelé suivant la revendication 1, **caractérisé en ce que** l'extrait sec dégraissé du lait consiste en petit-lait doux dégraissé en poudre ou concentré.

4. Produit de confiserie aéré congelé suivant la revendication 1, **caractérisé en ce que** l'extrait sec dégraissé du lait comprend du lait écrémé en poudre ou concentré.

5. Produit de confiserie aéré congelé suivant la revendication 1, **caractérisé en ce que** la matière grasse est une matière grasse végétale ou animale, hydrogénée ou fractionnée d'une autre manière.

6. Produit de confiserie aéré congelé suivant la revendication 5, **caractérisé en ce que** la matière grasse est choisie dans le groupe comprenant l'huile de palme, l'huile de coprah, l'huile de soja, l'huile de colza, l'huile d'olive, l'huile de palmiste, l'huile de coprah hydrogénée, l'huile de soja hydrogénée, l'oléine de palme, la matière grasse butyrique fractionnée et leurs mélanges.

7. Produit de confiserie aéré congelé suivant la revendication 1, **caractérisé en ce qu'**il comprend au moins un stabilisant choisi dans le groupe comprenant la farine de caroube, la farine de guar, des alginates, la carboxyméthylcellulose, la gomme xanthane, la carraghénine, la gélatine, des amidons utilisés seuls ou sous forme d'un mélange à une dose de 0,1 à 0,5 %, de préférence d'environ 0,25 % en poids.

8. Produit de confiserie aéré congelé suivant la revendication 1, **caractérisé en ce que** les agents édulcorants sont choisis dans le groupe comprenant le saccharose, le glucose, le fructose ou des sirops de glucose ou un mélange de ces agents.

9. Produit de confiserie aéré congelé suivant la revendication 1, **caractérisé en ce qu'**il comprend comme émulsionnant supplémentaire un monoglycéride insaturé ou monodiglycéride saturé en une quantité d'au moins 5 % en poids des émulsionnants totaux en remplacement partiel du monoester de propylèneglycol d'acide gras.

10. Produit de confiserie aéré congelé suivant la revendication 9, **caractérisé en ce qu'**il comprend comme émulsionnant supplémentaire un monoglycéride insaturé ou monodiglycéride saturé en une quantité de 0,04 a 0,16 % en poids en remplacement partiel du monoester de propylèneglycol d'acide gras.
